# EUROPÄISCHE PATENTANMELDUNG

(11) **EP 1 533 058 A1**
(43) Veröffentlichungstag der Anmeldung: **25.05.2005**
(21) Anmeldenummer: 03025996.4
(22) Anmeldetag: 14.11.2003
(51) Int. Cl.: B23B 31/12

(54) **Spannfutter**

(71) Anmelder: A & M Electric Tools GmbH, 71364 Winnenden (DE)
(72) Erfinder: Hirt, Dieter, 71364 Winnenden (DE); Geis, Wilhelm, 71397 Leutenbach (DE); Eisenhardt, Armin, 72406 Bisingen (DE); Kinne, Klaus, 74545 Michelfeld (DE)
(74) Vertreter: Riedel, Peter, Dipl.-Ing.

(57) **Zusammenfassung**

Die Erfindung betrifft ein Spannfutter (1) eines handgeführten Arbeitsgeräts, insbesondere einer Bohrmaschine, eines Akku-Bohrschraubers oder dergleichen. Das Spannfutter (1) weist einen drehend antreibbaren Grundkörper (2) und eine im Grundkörper (2) geführte Spanneinrichtung (3) für ein einzuspannendes Werkzeug auf. Es ist ein außenseitig des Grundkörpers (2) angeordneter und relativ dazu verdrehbarer, auf die Spanneinrichtung (3) wirkender Spannring (4) sowie eine stirnseitig des Spannfutters (1) im Bereich der Spanneinrichtung (3) angeordnete Abdeckkappe (5) vorgesehen. Die Abdeckkappe (5) ist außenseitig glatt ausgeführt und weist einen größeren maximalen Außendurchmesser (D1) auf als der stirnseitige Bereich (6) des Spannringes (4). Die Abdeckkappe (5) ist dabei am Grundkörper (2) relativ zu diesem frei drehbar gelagert.

## Beschreibung

Die Erfindung betrifft ein Spannfutter eines handgeführten Arbeitsgerätes, insbesondere einer Bohrmaschine, eines Akku-Bohrschraubers oder dergleichen mit den Merkmalen nach dem Oberbegriff des Anspruchs 1.

Handbohrmaschinen, Akku-Bohrschrauber oder dgl. weisen ein beispielsweise als 3-Backen-Bohrfutter ausgebildetes Spannfutter auf, in dem Bohrer, Schrauberbits oder dgl. eingespannt werden können. Zum Spannen ist außenseitig ein Spannring vorgesehen, mittels dessen die Spanneinrichtung betätigt und das Werkzeug eingespannt bzw. gelöst werden kann.

Der Spannring ist für eine bessere Griffigkeit außenseitig mit einer Strukturierung beispielsweise in Form einer Rändelung versehen. Die rauhe Oberfläche des Spannringes, das stirnseitige Ende des Spannfuttergrundkörpers sowie die Spanneinrichtung selbst sind in ihrer Scharfkantigkeit soweit entschärft, daß im Stillstand der Werkzeugmaschine eine sichere Betätigung der Spanneinrichtung ermöglicht ist.

In einem Betrieb derartiger Werkzeugmaschinen bei häufig zu wechselnden Werkzeugen kann der Spannring zum Auswechseln des Werkzeuges festgehalten werden. Die Maschine wird dabei wahlweise im Rechts- oder Linkslauf betätigt, in dessen Folge sich der Grundkörper des Spannfutters relativ zum Spannring verdreht. Es erfolgt eine Spannung bzw. Entspannung der Spanneinrichtung. Insbesondere bei dünnen Werkzeugen, wie beispielsweise Bohrer von geringem Durchmesser, ist dabei ein gleichzeitiges Halten dieses Werkzeuges mit den Fingern derjenigen Hand erforderlich, die auch den Spannring hält. Die Finger können dabei das vordere Ende des sich drehenden Grundkörpers oder auch die sich mitdrehenden Spannbacken berühren. Zur Vermeidung einer derartigen unerwünschten Berührung ist die Ausführung eines Spannfutters bekannt, bei der am stirnseitigen Ende des Spannfutters eine drehbar gelagerte Abdeckkappe mit geringem Durchmesser um den Grundkörper herum angeordnet ist. Mittels einer derartigen Abdeckkappe können die Finger bei geringer Spindeldrehzahl abgestützt und von dem freien Ende des Grundkörpers ferngehalten werden.

Im Bohr- bzw. Schraubbetrieb unter beengten räumlichen Bedingungen kann das sich drehende Spannfutter an die Oberfläche des Werkstückes gelangen. Das Spannfutter weist insbesondere im Bereich des Spannringes einen vergleichsweise großen Durchmesser auf. In Verbindung beispielsweise mit einer Rändelung oder einer anderen Oberflächenstrukturierung können bei einer Berührung mit einer Werkstückoberfläche hohe Reibgeschwindigkeiten entstehen. Insbesondere bei empfindlichen Werkstückoberflächen beispielweise bei Möbeln oder dgl. kann dies zu einer unerwünschten Oberflächenschädigung führen.

Es ist die Ausführung eines Spannfutters bekannt, bei der stirnseitig ein feststehender Schutzring vorgesehen ist. Das Spannfutter selbst dreht sich im Betrieb relativ zu diesem Schutzring, dessen Position relativ zur Werkzeugmaschine fixiert ist. Bei einem versehentlichen Abgleiten oder Heranführen des Spannfutters an eine Werkstückoberfläche hält der feststehende Ring die sich drehenden Teile des Spannfutters fern. Nachteilig ist dabei die aufwendige Konstruktion, die zu einem Festhalten des Ringes gegenüber dem drehenden Spannfutter erforderlich ist.

Der Erfindung liegt die Aufgabe zugrunde, ein gattungsgemäßes Spannfutter derart weiterzubilden, daß die Bearbeitung von Werkstücken mit empfindlichen Oberflächen vereinfacht ist.

Die Aufgabe wird durch ein Spannfutter mit den Merkmalen des Anspruchs 1 gelöst.

Dazu wird ein Spannfutter vorgeschlagen, bei dem eine stirnseitig des Spannfutters angeordnete, außenseitig glatt ausgeführte Abdeckkappe vorgesehen ist, die einen größeren maximalen Außendurchmesser aufweist als der stirnseitige Bereich des Spannringes und die dabei am Grundkörper relativ zu diesem frei drehbar gelagert ist.

Die Konstruktion ist vergleichsweise einfach. Im gewöhnlichen Betrieb dreht sich die Abdeckkappe gemeinsam mit dem Grundkörper und dem Spannring des Spannfutters mit. Bei einer versehentlichen Berührung mit einer Werkstückoberfläche oder mit der Hand einer Bedienperson wird die Abdeckkappe abgebremst. Eine Beschädigung ist vermieden. Die glatte Ausbildung der Abdeckkappe erlaubt ein Gleiten auf der Oberfläche während des Abbremsvorganges oder bei nur geringem Berührungsdruck. Der gefährdetste Bereich einer Berührung zwischen drehenden Teilen des Spannfutters und einer Werkstückoberfläche ist der stirnseitige Bereich des Spannringes. Der Spannring weist an dieser Stelle einen vergleichsweise großen Durchmesser auf und liegt dabei in axialer Richtung nahe am eingespannten Werkzeug. Durch den an dieser Stelle größeren Durchmesser der Abdeckkappe ist eine Berührung des Spannringes an seiner rauhen Oberfläche vermieden.

Die Berührungssicherheit ist weiter steigerbar, wenn der maximale Außendurchmesser der Abdeckkappe größer als der maximale Außendurchmesser des insbesondere zylindrisch ausgebildeten Spannringes ist. Unabhängig von der Winkellage der Werkzeugmaschine ist auch eine Werkstückberührung in dem von der Abdeckkappe entfernt liegenden Bereich des Spannfutters bzw. des Spannringes vermeidbar.

In vorteilhafter Weiterbildung ist die Abdeckkappe im wesentlichen in Form eines Konus mit einer konischen, in Richtung der Spanneinrichtung spitz zulaufenden Mantelfläche ausgebildet. Das mit einem vergleichsweise großen Durchmesser versehene Spannfutter kann frei in einem vergleichsweise engen Arbeitsraum bewegt werden, der außerhalb der konischen Mantelfläche liegt. Das Arbeiten in Werkstückwinkeln ist vereinfacht. Bei einer unbeabsichtigten Berührung mit dem Werkstück kommt es im Werkstückwinkel zu einer zumindest näherungsweise flächigen Anlage der Abdeckkappe mit der Werkstückoberfläche. Bei der auftretenden vergleichsweise geringen Flächenpressung ergibt sich eine gute Gleitwirkung unter Vermeidung von Oberflächenkratzern.

Das Spannfutter ist dabei zweckmäßig so ausgebildet, daß der Spannring, die Spanneinrichtung insbesondere im voll ausgefahrenen Zustand und/oder das stirnseitige Ende des Grundkörpers innerhalb der konischen Mantelfläche liegen. Die genannten im Betrieb sich drehenden Bauteile sind mittels der konisch ausgebildeten Abdeckkappe auch bei winkligen Arbeiten zuverlässig von der Werkstückoberfläche ferngehalten.

Für den Schutz einer Werkstückoberfläche bei Berührungen in axialer Richtung weist die Abdeckkappe zweckmäßig an ihrem stirnseitigen Ende eine radial zum Grundkörper beabstandete, gerundete Stirnkante auf. Die Rundung der Stirnkante vermeidet die Bildung von Kratzern. Die Ausgestaltung mit einem radialen Abstand zum Grundkörper erlaubt einen günstigen großen Kantenradius ohne Einschränkung der relativen Verdrehbarkeit.

In einer konstruktiv einfachen Ausführung ist die Abdeckkappe am Grundkörper drehbar gleitgelagert. Die Gleitlagerung hat sich als robust und einfach zu fertigen herausgestellt, wobei die auftretenden Reibkräfte hinreichend gering sind. Für empfindlichere Oberflächen kann auch eine Wälzlagerung vorgesehen sein.

In vorteilhafter Weiterbildung übergreift die Abdeckkappe das stirnseitige Ende des Spannringes mit Spiel und ist am Spannring gleitend abstützbar. Das Spiel im Bereich des Spannringes vermeidet das Auftreten übermäßiger Reibkräfte in einem Bereich mit vergleichsweise großem Durchmesser, bei dem hohe Relativgeschwindigkeiten auftreten können. Die gleitende Abstützbarkeit erlaubt eine einfache, spielbehaftete Gleitlagerung am Grundkörper, wobei die gleitende Abstützung im wesentlichen bei seitlicher Belastung in Folge der spielbedingten Auslenkung zum Tragen kommt. Gleichzeitig ist durch das Übergreifen der Abdeckkappe ein Eindringen von Schmutz, Staub, Spänen oder dgl. in die Innenseite des Spannringes vermieden.

Für eine leichte Montierbarkeit kann eine Ausbildung zweckmäßig sein, bei der die Abdeckkappe in axialer Richtung formschlüssig und insbesondere mittels eines Schnappverbinders am Grundkörper gehalten ist. Es ist ein geringer konstruktiver und fertigungstechnischer Aufwand erforderlich.

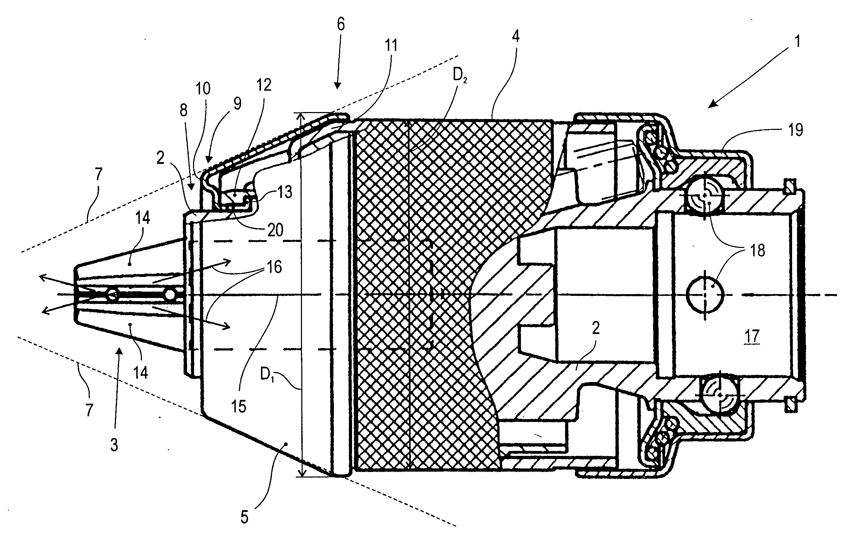

Ein Ausführungsbeispiel der Erfindung ist im folgenden anhand der Zeichnung näher beschrieben.

Die einzige Figur zeigt in einer teilweise geschnittenen Längsansicht ein Spannfutter 1, das mittels einer zentrischen Aufnahmebohrung 17 auf eine nicht dargestellte Werkzeugspindel einer handgeführten Werkzeugmaschine, beispielsweise einer Bohrmaschine, eines Akku-Bohrschraubers oder dgl. aufschiebbar ist. Es sind um den Umfang der Aufnahmebohrung 17 verteilt eine Anzahl von Rastkugeln 18 angeordnet, mittels derer das Spannfutter 1 auf der Werkzeugspindel verrastbar ist. Die Rastung ist über eine Riegeleinrichtung 19 lösbar, in dessen Folge das Spannfutter 1 von der Werkzeugspindel abgezogen werden kann. Die Rastkugeln 18 sind in einem Grundkörper 2 des Spannfutters 1 gehalten und dienen neben der Festlegung des Spannfutters 1 auf der Werkzeugspindel auch der Drehmomentübertragung von der Werkzeugspindel auf das Spannfutter 1 für einen drehenden Antrieb.

Außenseitig des Grundkörpers 2 ist ein relativ zum Grundkörper 2 verdrehbarer Spannring 4 angeordnet, mittels dessen eine Spanneinrichtung 3 am stirnseitigen Ende 8 des Grundkörpers 2 betätigbar ist. Die Spanneinrichtung 3 weist im gezeigten Ausführungsbeispiel drei Spannbacken 14 auf, die im Grundkörper 2 konisch zu einer Drehachse 15 des Spannfutters 1 in Richtung der Doppelpfeile 16 verschieblich geführt sind.

Der Spannring 4 ist außenseitig mit einer Oberflächenstrukturierung beispielhaft in Form einer angedeuteten Rändelung versehen. An ihr kann der Spannring 4 manuell gedreht werden, in dessen Folge die Spannbacken 14 in Richtung der Doppelpfeile 16 verschoben werden. Die Spannbacken 14 sind in einer Position gezeigt, bei der sie in axialer Richtung um ihr maximales Maß nach außen aus dem Grundkörper 2 herausgefahren sind. Sie liegen dabei radial innenseitig aneinander an. Die Spanneinrichtung 3 ist dabei voll ausgefahren und vollständig geschlossen.

Im Bereich des stirnseitigen Endes 8 vom Grundkörper 2 weist das Spannfutter 1 eine Abdeckkappe 5 auf. Die Abdeckkappe 5 ist außenseitig mit einer glatten Oberfläche versehen und ist am Grundkörper 2 relativ zu diesem frei drehbar gelagert. Die Abdeckkappe 5 ist dazu in ihrem radial inneren Bereich als Hülse 20 ausgebildet, die auf dem zylindrisch ausgeführten stirnseitigen Ende 8 des Grundkörpers 2 in Bildung eines Gleitlagers in Drehrichtung gleitend geführt ist. Bedarfsweise kann auch eine Wälzlagerung beispielsweise in Form eines Rollenlagers zweckmäßig sein. Zur axialen Fixierung der Abdeckkappe 5 weist diese innenseitig an die Hülse 20 anschließend eine radial nach außen gebogene Rastkante 13 auf, die von einer Anzahl von Schnappverbindern 12 hintergriffen ist. Es ergibt sich eine formschlüssige rastende Festlegung der Abdeckkappe 5 am Grundkörper 2.

Die Abdeckkappe kann bedarfsweise als Kugelkalotte, als Zylinderabschnitt oder in geeigneter anderer Form ausgebildet sein. Im gezeigten Ausführungsbeispiel weist die Abdeckkappe 5 im wesentlichen die Form eines Konus mit einer konischen, in Richtung der Spanneinrichtung 3 spitz zulaufenden Mantelfläche 7 auf. Die voll ausgefahren gezeigte Spanneinrichtung 3, das stirnseitige Ende 8 des Grundkörpers 2 sowie der vollständige Spannring 4 liegen innerhalb der konischen Mantelfläche 7. Der Spannring 4 ist im gezeigten Ausführungsbeispiel im wesentlichen zylindrisch ausgebildet und weist einen maximalen Durchmesser D₂ auf. Bedarfsweise kann auch eine ballige, konische oder eine andere geeignete Formgebung des Spannringes 4 zweckmäßig sein. Unabhängig von der gewählten Form des Spannringes 4 ist es zweckmäßig, daß ein größter Außendurchmesser D₁ der Abdeckkappe 5 größer als der Durchmesser zumindest des stirnseitigen Bereiches 6 vom Spannring 4 ist. Wegen der gezeigten zylindrischen Ausbildung des Spannringes 4 ist der Durchmesser des stirnseitigen Bereichs vom Spannring 4 gleich dessen maximalem Durchmesser D₂. Der größte Durchmesser D₁ der Abdeckkappe 5 ist damit größer als der maximale Durchmesser D₂ vom Spannring 4.

Die Abdeckkappe 5 weist an ihrem der Spanneinrichtung 3 zugewandten stirnseitigen Ende 9 eine radial zum Grundkörper 2 beabstandete, gerundete Stirnkante 10 auf. An ihrer gegenüberliegenden Seite ist die Abdeckkappe 5 derart ausgebildet, daß sie ein stirnseitiges Ende 11 des Spannringes 4 mit Spiel übergreift. Das Spiel in der Gleitlagerung im Bereich der Hülse 20 ist dabei so gewählt, daß die Abdeckkappe 5 bei Belastung in radialer Richtung am stirnseitigen Ende 11 des Spannringes 4 gleitend abstützbar ist.

## Patentansprüche

1. Spannfutter eines handgeführten Arbeitsgerätes, insbesondere einer Bohrmaschine, eines Akku-Bohrschraubers oder dergleichen, mit einem drehend antreibbaren Grundkörper (2), mit einer im Grundkörper (2) geführten Spanneinrichtung (3) für ein einzuspannendes Werkzeug, mit einem außenseitig des Grundkörpers (2) angeordneten und relativ dazu verdrehbaren, auf die Spanneinrichtung (3) wirkenden Spannring (4) und mit einer stirnseitig des Spannfutters (1) im Bereich der Spanneinrichtung (3) angeordneten Abdeckkappe (5),
**dadurch gekennzeichnet, daß** die Abdeckkappe (5) außenseitig glatt ausgeführt ist, einen größeren maximalen Außendurchmesser (D₁) aufweist als der stirnseitige Bereich (6) des Spannringes (4) und dabei am Grundkörper (2) relativ zu diesem frei drehbar gelagert ist.

2. Spannfutter nach Anspruch 1,
**dadurch gekennzeichnet, daß** der maximale Außendurchmesser (D₁) der Abdeckkappe (5) größer als der maximale Außendurchmesser (D₂) des insbesondere zylindrisch ausgebildeten Spannringes (4) ist.

3. Spannfutter nach Anspruch 1 oder 2,
**dadurch gekennzeichnet, daß** die Abdeckkappe (5) im wesentlichen in Form eines Konus mit einer konischen, in Richtung der Spanneinrichtung (3) spitz zulaufenden Mantelfläche (7) ausgebildet ist.

4. Spannfutter nach Anspruch 3,
**dadurch gekennzeichnet, daß** der Spannring (4) innerhalb der konischen Mantelfläche (7) liegt.

5. Spannfutter nach Anspruch 3 oder 4,
**dadurch gegenzeichnet, daß** die Spanneinrichtung (3) insbesondere im voll ausgefahrenen Zustand innerhalb der konischen Mantelfläche (7) liegt.

6. Spannfutter nach einem der Ansprüche 3 bis 5,
**dadurch gekennzeichnet, daß** das stirnseitige Ende (8) des Grundkörpers (2) innerhalb der konischen Mantelfläche (7) liegt.

7. Spannfutter nach einem der Ansprüche 1 bis 6,
**dadurch gekennzeichnet, daß** die Abdeckkappe (5) an ihrem stirnseitigen Ende (9) eine radial zum Grundkörper (2) beabstandete, gerundete Stirnkante (10) aufweist.

8. Spannfutter nach einem der Ansprüche 1 bis 7,
**dadurch gekennzeichnet, daß** die Abdeckkappe (5) am Grundkörper (2) drehbar gleitgelagert ist.

9. Spannfutter nach einem der Ansprüche 1 bis 8,
**dadurch gekennzeichnet, daß** die Abdeckkappe (5) das stirnseitige Ende (11) des Spannringes (4) mit Spiel übergreift und am Spannring (4) gleitend abstützbar ist.

10. Spannfutter nach einem der Ansprüche 1 bis 9,
**dadurch gekennzeichnet, daß** die Abdeckkappe (5) in axialer Richtung formschlüssig und insbesondere mittels eines Schnappverbinders (12) am Grundkörper (2) gehalten ist.

## Geänderte Patentansprüche

### Geänderte Patentansprüche gemäss Regel 86(2) EPÜ.

**1.** Spannfutter eines handgeführten Arbeitsgerätes, insbesondere einer Bohrmaschine, eines Akku-Bohrschraubers oder dergleichen, mit einem drehend antreibbaren Grundkörper (2), mit einer im Grundkörper (2) geführten Spanneinrichtung (3) für ein einzuspannendes Werkzeug, mit einem außenseitig des Grundkörpers (2) angeordneten und relativ dazu verdrehbaren, auf die Spanneinrichtung (3) wirkenden Spannring (4) und mit einer stirnseitig des Spannfutters (1) im Bereich der Spanneinrichtung (3) angeordneten Abdeckkappe (5),
**dadurch gekennzeichnet, daß** die Abdeckkappe (5) außenseitig glatt ausgeführt ist, einen größeren maximalen Außendurchmesser (D₁) aufweist als ein maximaler Außendurchmesser (D₂) im stirnseitigen Bereich (6) des Spannringes (4) und dabei am Grundkörper (2) relativ zu diesem frei drehbar gelagert ist.
